# EUROPÄISCHE PATENTSCHRIFT

(11) **EP 3 580 098 B1**
(45) Veröffentlichungstag und Bekanntmachung des Hinweises auf die Patenterteilung: **13.03.2024**
(21) Anmeldenummer: 18703694.2
(22) Anmeldetag: 19.01.2018
(51) Int. Cl.: B60R 21/203

(54) **LAGEREINHEIT, LENKRADBAUGRUPPE SOWIE VERFAHREN ZUR HERSTELLUNG EINER FAHRZEUGBAUGRUPPE**
BEARING UNIT, STEERING-WHEEL SUBASSEMBLY AND METHOD FOR PRODUCING A VEHICLE SUBASSEMBLY
UNITÉ PALIER, ENSEMBLE VOLANT DE DIRECTION AINSI QUE PROCÉDÉ DE PRODUCTION D'UN ENSEMBLE VÉHICULE

(30) Priorität: 08.02.2017 DE 102017102463
(43) Veröffentlichungstag der Anmeldung: 18.12.2019
(73) Patentinhaber: ZF Automotive Safety Germany GmbH, 63743 Aschaffenburg (DE)
(72) Erfinder: SCHÜTZ, Dominik, 63872 Heimbuchenthal (DE)
(74) Vertreter: ZF Patentabteilung - DIPS
(86) Internationale Anmeldenummer: PCT/EP2018/051260
(87) Internationale Veröffentlichungsnummer: WO 2018/145875

(56) Entgegenhaltungen:
- DE-A1-102014 006 299
- DE-U1-202015 101 794
- US-A- 5 924 831
- US-A- 6 119 546

## Beschreibung

Die vorliegende Erfindung betrifft eine Lagereinheit einer Fahrzeugbaugruppe, wobei die Fahrzeugbaugruppe einen fahrzeugseitigen Träger und ein am Träger zu befestigendes Bauteil aufweist.

Darüber hinaus betrifft die vorliegende Erfindung eine Lenkradbaugruppe mit einem Fahrzeuglenkrad und einem Gassackmodul sowie ein Verfahren zur Herstellung einer Fahrzeugbaugruppe mit einem fahrzeugseitigen Träger, einem am Träger zu befestigenden Bauteil und zumindest einer Lagereinheit.

Bei vielen Fahrzeugbaugruppen, insbesondere im Fahrzeuginnenraum, wird ein Bauteil an einem fahrzeugseitigen Träger befestigt. Ein Beispiel für eine solche Fahrzeugbaugruppe ist ein Fahrzeuglenkrad, das einen Träger darstellt, und ein daran befestigtes Gassackmodul, das das Bauteil darstellt.

Aus optischen Gründen ist es erwünscht, dass die Spaltmaße zwischen dem Träger oder einer trägerseitigen Verkleidung und dem Bauteil möglichst gleichmäßig und schmal und Übergänge möglichst absatzfrei ausfallen. Ferner muss sichergestellt werden, dass die Funktionen von Bauteil und Träger nicht eingeschränkt werden. Da im Automobilbereich geforderte Spaltmaße, insbesondere im Innenraum eines Fahrzeugs, unterhalb der addierten Fertigungstoleranzen der einzelnen Bauteile liegen, ist eine größere Genauigkeit und Gleichmäßigkeit der Spaltmaße nur durch eine Verringerung der Fertigungstoleranzen der Bauteile realisierbar. Damit ist jedoch ein wesentlich größerer Fertigungsaufwand verbunden, was zu höheren Fertigungskosten führt.

Um dieser Problematik zu begegnen, ist es bekannt, am Bauteil und/oder am Träger Auflageflächen vorzusehen. Diese werden dann im Rahmen eines Nachbearbeitungsschrittes an die aktuell vorliegenden Toleranzen angepasst. Jedoch bedeutet auch ein Nachbearbeitungsschritt zusätzlichen Fertigungsaufwand. Gleichzeitig müssen vor der Nachbearbeitung die aktuell vorliegenden Bauteilmaße exakt bestimmt werden, um festzulegen, in welchem Umfang das Bauteil nachbearbeitet werden muss.

Darüber hinaus ist es bekannt, Zwischenbauteile, z.B. in Form von Abstandshaltern zu verwenden und damit die vorliegenden Fertigungstoleranzen auszugleichen. In diesem Fall müssen entweder die Zwischenbauteile an die vorliegenden Toleranzen angepasst werden oder es müssen die Zwischenbauteile aus einem Sortiment passend ausgewählt werden. Bei der Montage des Bauteils am Träger stellt das Zwischenbauteil dann ein zusätzliches Element dar. Dadurch entsteht ebenfalls ein zusätzlicher Aufwand sowie Kosten für das Zwischenbauteil.

Ferner ist die Verwendung von Exzentern zu Justagezwecken bekannt. Dabei kommen z.B. exzentrische Schraubenköpfe zum Einsatz. Je nach Position des Exzenters im Raum kann so ein Abstand zwischen einem Träger und einem Bauteil eingestellt werden. Nachteilig an Exzentern ist, dass diese nur einen sehr eingeschränkten Verstellbereich in einer vorher festgelegten Richtung aufweisen. Statistisch und damit unvorhersehbar verteilte Toleranzen können also nur in Ausnahmefällen vollständig ausgeglichen werden.

Als Beispiel für eine Fahrzeugbaugruppe, bei der ein Gassackmodul an einem Fahrzeuglenkrad befestigt wird, sei die DE 10 2012 002 722 A1 genannt. Hier werden ein Verfahren und eine Vorrichtung zur Fertigung einer Fahrzeugbaugruppe, einer Lagereinheit, eines Fahrzeuglenkrads, eines Hupenmoduls für eine Lenkradbaugruppe sowie eine Lenkradbaugruppe gezeigt. Die hier verwendeten Lagerteile verfügen über Höcker, die mittels eines Ultraschallschweißverfahrens lokal aufgeschmolzen werden können. Dadurch kann das Bauteil, in diesem Fall das Gassack- oder Hupenmodul, relativ zum Träger, in diesem Fall dem Lenkrad, ausgerichtet werden.

In der US 5,924,831 A ist das Anbringen eines Luftsackaufblasmoduls an einem Lenkrad beschrieben, mit einer Rastbefestigung, welche keine Werkzeuge benötigt, Klappergeräusche minimiert und gewisse Maßtoleranzen ausgleichen kann. Die Rastbefestigung umfasst dabei eine Halteklammer und eine Rastaufnahme, welche schwimmend in der Halteklammer aufgenommen ist. Die schwimmende Lagerung der Rastaufnahme erleichtert das Einführen des Rastbolzens und kann gewisse Maßtoleranzen der an der Rastbefestigung beteiligten Bauteile kompensieren.

Die DE 20 2015 101 794 U1 offenbart eine Ausgleichsanordnung für einen Fahrzeugrahmen, die in der Lage ist, sich zwischen voneinander beabstandeten Rahmenkomponenten zu erstrecken und diese zu sichern.

Die Aufgabe der vorliegenden Erfindung ist es, eine Lagereinheit zu schaffen, mit der eine besonders einfache, aufwandsarme und genaue Ausrichtung eines Bauteils relativ zu einem Träger möglich ist.

Erfindungsgemäß wird diese Aufgabe gelöst durch eine Lagereinheit einer Fahrzeugbaugruppe, wobei die Fahrzeugbaugruppe eine Innenraumbaugruppe ist und einen fahrzeugseitigen Träger sowie ein am Träger zu befestigendes Bauteil aufweist, wobei der Träger ein Fahrzeuglenkrad (10) und das am Träger zu befestigende Bauteil ein Gassackmodul (12) ist, mit wenigstens einem verstellbaren Distanzelement zur Lageausrichtung des Bauteils am Träger und einem ersten Befestigungsmittel, durch welches der Träger oder das Bauteil am Distanzelement festlegbar ist. Das Distanzelement weist ein trägerseitiges Halteteil, das ein erstes Gewinde umfasst, ein bauteilseitiges Halteteil, das ein zweites Gewinde umfasst, und ein zweites Befestigungsmittel auf, mit dem das trägerseitige Halteteil am Träger festlegbar ist. Das zweite Gewinde greift dabei derart in das erste Gewinde ein, dass sich durch eine Rotationsbewegung des trägerseitigen Halteteils relativ zum bauteilseitigen Halteteil die Länge des Distanzelements ändert. Mit den beiden Gewinden ist eine Möglichkeit gefunden worden, auf einfache Art und Weise das Bauteil zum Träger auszurichten. Mit den Gewinden ist folglich eine aufwandsarme, aber präzise Ausrichtung möglich. Gewinde sind Standardelemente im Bereich der Fahrzeugtechnik, sodass diese kostengünstig hergestellt werden können. Darüber hinaus wird es durch die Gewinde möglich, das Distanzelement in seiner Länge mit geringem Aufwand nachzujustieren. Gemäß einer bevorzugten Ausführungsvariante der Lagereinheit ist das erste Befestigungsmittel ein bauteilseitiges Befestigungsmittel und das zweite Befestigungsmittel ein trägerseitiges Befestigungsmittel.

Erfindungsgemäß ist vorgesehen, dass das trägerseitige Halteteil oder das bauteilseitige Halteteil als Mutter und das andere der beiden Halteteile als in die Mutter eingedrehte Hülse ausgebildet ist. Durch diese Gestaltung ergibt sich ein einfacher und damit kostengünstig herstellbarer Aufbau. Ferner lässt sich durch die Hülse ein trägerseitiges Befestigungsmittel im Distanzelement versenken.

Bevorzugt weist die Mutter auf ihrer äußeren Mantelfläche mindestens abschnittsweise eine Verzahnung auf. Diese ermöglicht es, die Mutter mit einfachen Mitteln in eine Drehbewegung relativ zur Hülse zu versetzen. Dadurch wird die schnelle Einstellung der Länge des Distanzelements erleichtert. Über die Verzahnung kann die Mutter auch mit einem händisch oder automatisiert betätigten Werkzeug, z.B. einem mit der Verzahnung der Mutter kämmenden Gegenzahnrad, verdreht werden. Folglich sinken der Aufwand für die Montage und die Einstellung der Länge des Distanzelements.

Gemäß einer Ausführungsform umfasst das erste, insbesondere bauteilseitig angeordnete Befestigungsmittel eine Rastfeder, die einerseits am bauteilseitigen Halteteil und andererseits am Bauteil befestigbar ist, um das Bauteil mit dem Distanzelement einfach und schnell lösbar zu koppeln. Die Rastfeder stellt damit eine universelle Schnittstelle dar, die sich vielfach bewährt hat.

Ferner kann am bauteilseitigen Halteteil eine Halterung angeformt sein, in die die Rastfeder einsetzbar ist und die diese lagert, insbesondere wobei die Halterung ein einstückig angeformter Haken ist. Es ist somit eine einfache und kostengünstige Herstellbarkeit der Halterung gewährleistet. Zum Beispiel kann die Halterung durch ein Spritzgussverfahren am bauteilseitigen Halteteil einstückig angeformt sein. Gleichzeitig wird so eine sichere Aufnahme der Rastfeder gewährleistet.

Nach einer Weiterbildung der Erfindung ist das zweite, insbesondere trägerseitig angeordnete Befestigungsmittel eine durch Durchgangslöcher in den träger- und bauteilseitigen Halteteilen hindurchragende Schraube, die in den Träger eindrehbar ist, was insgesamt eine einfache Befestigung ergibt.

Vorzugsweise hat das Durchgangsloch im bauteilseitigen Halteteil einen Absatz zur Anlage des Schraubenkopfes und/oder ist das Durchgangsloch gegenüber der Schraube übergroß, sodass das Distanzelement relativ zur noch nicht angezogenen Schraube quer zur Schraubenlängsachse verschiebbar ist. Damit kann das Distanzelement in einer Ebene verschoben und somit relativ zum Träger ausgerichtet werden. Die Kombination aus dem Absatz und dem übergroßen Durchgangsloch ist dabei einfach und kostengünstig herstellbar.

Insbesondere kann die Lagereinheit mehrere, vorzugsweise drei, unabhängig voneinander verstellbare Distanzelemente aufweisen, insbesondere wobei das bauteilseitige Befestigungsmittel an allen Distanzelementen gelagert ist. Alle drei Distanzelemente können in einer durch den Träger vorgegebenen Ebene verschoben und in ihrer Länge verstellt werden. Damit ist eine Ausrichtung des Bauteils relativ zum Träger in drei translatorischen und drei rotatorischen Freiheitsgraden möglich. Insgesamt kann das Bauteil also in allen sechs im Raum vorhandenen Freiheitsgraden ausgerichtet werden. Zwei der translatorischen Freiheitsgrade liegen in der durch den Träger vorgegebenen Ebene. Der dritte translatorische Freiheitsgrad wird durch die Möglichkeit der Längenänderung der Distanzelemente gegeben. Die rotatorischen Freiheitsgrade werden durch die Möglichkeit der unabhängigen Verstellbarkeit der Distanzelemente realisiert. Wird z.B. das Bauteil von drei Distanzelementen gehalten, kann die Länge von zwei Distanzelementen beibehalten werden und die Länge des dritten Distanzelements verändert und angepasst werden. Eine Befestigung mit drei Distanzelementen ist dabei technisch und wirtschaftlich ideal. Eine Verstellbarkeit in sechs Freiheitsgraden kann jedoch auch mit mehr als drei Distanzelementen erreicht werden.

Ferner wird die Aufgabe durch eine Fahrzeuglenkradbaugruppe mit einem Fahrzeuglenkrad und einem Gassackmodul gelöst, wobei das Fahrzeuglenkrad und das Gassackmodul durch eine oder mehrere, vorzugsweise drei, erfindungsgemäße Lagereinheiten miteinander verbunden sind. Wie oben in allgemeiner Form beschrieben, ist damit eine Ausrichtung des Gassackmoduls zum Fahrzeuglenkrad in drei translatorischen und drei rotatorischen Freiheitsgraden möglich. Es ergibt sich so eine Möglichkeit, das Gassackmodul optisch perfekt zum Lenkrad auszurichten.

Darüber hinaus wird die Aufgabe durch ein Verfahren zur Herstellung einer Fahrzeugbaugruppe mit einem fahrzeugseitigen Träger, einem am Träger zu befestigenden Bauteil und zumindest einer erfindungsgemäßen Lagereinheit gelöst, wobei der Träger ein Fahrzeuglenkrad (10) und das am Träger zu befestigende Bauteil ein Gassackmodul (12) ist. Das Verfahren umfasst die folgenden Schritte:
a) Anordnen mindestens eines verstellbaren Distanzelements zum Träger,
b) Rotieren eines der beiden Halteteile relativ zum anderen der beiden Halteteile zur Einstellung der Länge des Distanzelement,
c) Arretieren des trägerseitigen Befestigungsmittels und damit des eingestellten Distanzelements am Träger, und
d) Arretieren des Bauteils durch Anbringen des bauteilseitigen Befestigungsmittels am Bauteil und am Distanzelement.

Damit ist eine einfache Möglichkeit zur Montage eines Bauteils an einem Träger gegeben, wobei die Position des Bauteils am Träger ausgerichtet werden kann.

Vorzugsweise wird im Schritt a) das Distanzelement in einem Abstand zum Träger angeordnet und im Schritt b) eines der beiden Halteteile relativ zum anderen derart verdreht, dass das Distanzelement axial am Träger anschlägt. Der Abstand zum Träger kann dabei z.B. dadurch entstehen, dass das Distanzelement vollautomatisch in einer Ausrichtebene beabstandet vom Träger angeordnet wird. Die Ausrichtebene kann dabei der idealtypischen Ebene für die Distanzelemente entsprechen. Ein Abstand zum Träger kann dadurch zustande kommen, dass der Träger mit Fertigungstoleranzen behaftet ist. Durch das anschließende Einstellen des Distanzelements, bis dieses am Träger anschlägt, werden diese Fertigungstoleranzen kompensiert. Dieses Verfahren erlaubt es auf einfache Weise, die vorliegenden Fertigungstoleranzen exakt auszugleichen, ohne dabei die exakten Maße des Trägers erfassen zu müssen.

Eine Weiterbildung sieht vor, dass das Rotieren im Schritt b) mittels eines motorangetriebenen Werkzeugs kraftgesteuert und/oder vollständig automatisiert erfolgt. Somit ist eine schnelle und reproduzierbare Einstellung des Distanzelements gewährleistet. Mittels der Kraftsteuerung kann ein Anschlagen des Distanzelements am Träger sensorisch erfasst werden. Beispielsweise kann ein sogenannter Drehmomentschlüssel zum Ausführen des Schritts b) verwendet werden.

Zusätzlich kann im Schritt c) das trägerseitige oder das bauteilseitige Halteteil als Mutter ausgebildet sein und über eine mindestens abschnittsweise auf einer äußeren Mantelfläche der Mutter angeordnete Verzahnung in Rotationsbewegung versetzt werden, insbesondere über ein motorangetriebenes Werkzeug. Es ergibt sich so eine einfache und kostengünstige Möglichkeit, die Mutter automatisiert in Drehbewegung zu versetzen und somit das Distanzelement einzustellen.

Die Erfindung kann darüber hinaus so gestaltet sein, dass das trägerseitige Befestigungsmittel eine Schraube ist, die vor Schritt b) in den Träger eingedreht wird, ohne axial verspannt zu werden, sodass im Schritt b) das Distanzelement in seiner Länge verändert werden kann, und dass erst im Schritt c) die Schraube angezogen wird. Die Schraube dient zuerst als Verliersicherung und dann der Befestigung. Durch das erste Eindrehen werden das Distanzelement und die Schraube gegen Verlieren gesichert. Erst dann erfolgt die Justage durch Längenänderung. Das Verfahren ist so weniger anfällig gegenüber Fehlern.

In einer Variante wird das wenigstens eine Distanzelement vor Schritt c) seitlich so verschoben, dass es relativ zum Träger eine gewünschte seitliche Ausrichtung aufweist.

Bevorzugt werden drei verstellbare Distanzelemente verwendet, die vorzugsweise unabhängig voneinander verstellbar sind. Es ergibt sich somit bei der Verwendung von drei verstellbaren Distanzelementen eine Einstellbarkeit in drei translatorischen und drei rotatorischen Freiheitsgraden, also in allen im Raum verfügbaren Freiheitsgraden.

Nach einer Weiterbildung können im Schritt a) mehrere, vorzugsweise alle Distanzelemente in einem Werkzeug zueinander ausgerichtet gehalten, zum Träger bewegt und zu ihm ausgerichtet werden. Die Distanzelemente können im Werkzeug in einer Ausrichtebene angeordnet sein. Damit werden die Distanzelemente auch im Träger derart montiert, dass die bauteilseitigen Halteteile der Distanzelemente in der Ausrichtebene liegen und die fertigungsbedingten Toleranzen des Trägers ausgeglichen werden. Es ist dafür nicht notwendig, die Maße des Trägers zu erfassen.

Die Erfindung wird nachstehend anhand der beigefügten Zeichnungen anhand eines Beispiels näher erläutert. Es zeigen:
- Figur 1 eine erfindungsgemäße Lenkradbaugruppe mit einer erfindungsgemäßen Lagereinheit,
- Figur 2 die erfindungsgemäße Lenkradbaugruppe mit der erfindungsgemäßen Lagereinheit aus Figur 1 in einer anderen Perspektive,
- Figur 3 die erfindungsgemäße Lagereinheit bestehend aus drei verstellbaren Distanzelementen,
- Figur 4 eine Detailansicht eines Distanzelements der erfindungsgemäßen Lagereinheit nach Figur 3,
- Figur 5 eine geschnittene Detailansicht der Lagereinheit samt Lenkrad nach Figur 4,
- Figur 6 eine geschnittene Ansicht der Lagereinheit nach Figur 5 während des Ablaufs des erfindungsgemäßen Verfahrens, und
- Figur 7 eine alternative Ausführungsform der Lagereinheit gemäß Figur 3.

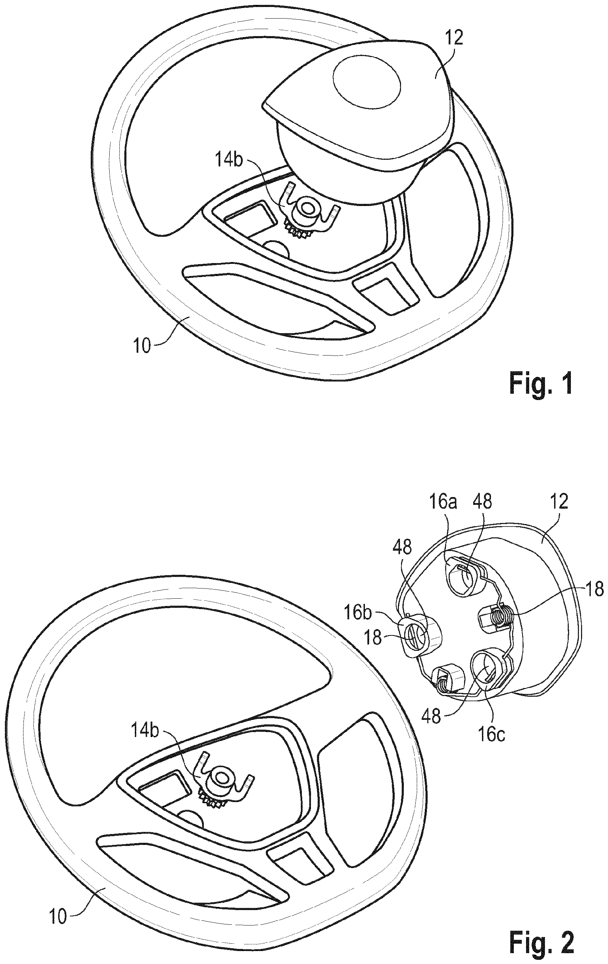

Figur 1 zeigt eine Lagereinheit einer Fahrzeugbaugruppe am Beispiel einer Lenkradbaugruppe, mit einem Fahrzeuglenkrad 10 und einem Gassackmodul 12. Das Gassackmodul 12 ist dabei in einer Position dargestellt, von der aus das Gassackmodul 12 in das Fahrzeuglenkrad 10 eingesetzt werden kann.

Zur Ausrichtung und Montage des Gassackmoduls 12 am Fahrzeuglenkrad 10 wird die Lagereinheit mit verstellbaren Distanzelementen 14a, 14b, 14c genutzt, von denen in den Figuren 1 und 2 jeweils nur das Distanzelement 14b sichtbar ist.

In der Figur 2 ist das Gassackmodul 12 gedreht dargestellt, sodass an der Rückseite des Gassackmoduls 12 angebrachte Gegenelemente 16a, 16b, 16c sichtbar sind, die nach der Montage mit den verstellbaren Distanzelementen 14a, 14b, 14c im Fahrzeuglenkrad 10 zusammenwirken. Die Montage des Gassackmoduls 12 an den Distanzelementen 14a, 14b, 14c erfolgt mithilfe eines bauteilseitigen Befestigungselements, das an allen Distanzelementen 14a, 14b, 14c angreifen kann und gemäß Figur 2 als Rastfeder 18 ausgeführt ist.

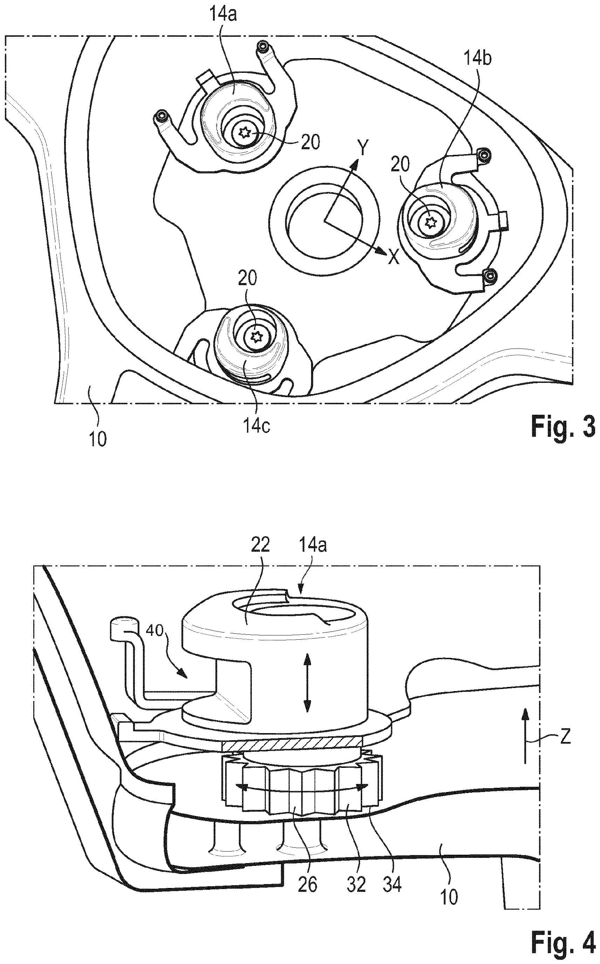

Die Befestigung der Distanzelemente 14a, 14b, 14c am Fahrzeuglenkrad 10 erfolgt mit Hilfe von einer Schraube 20 je Distanzelement 14a, 14b, 14c (siehe Figur 3).

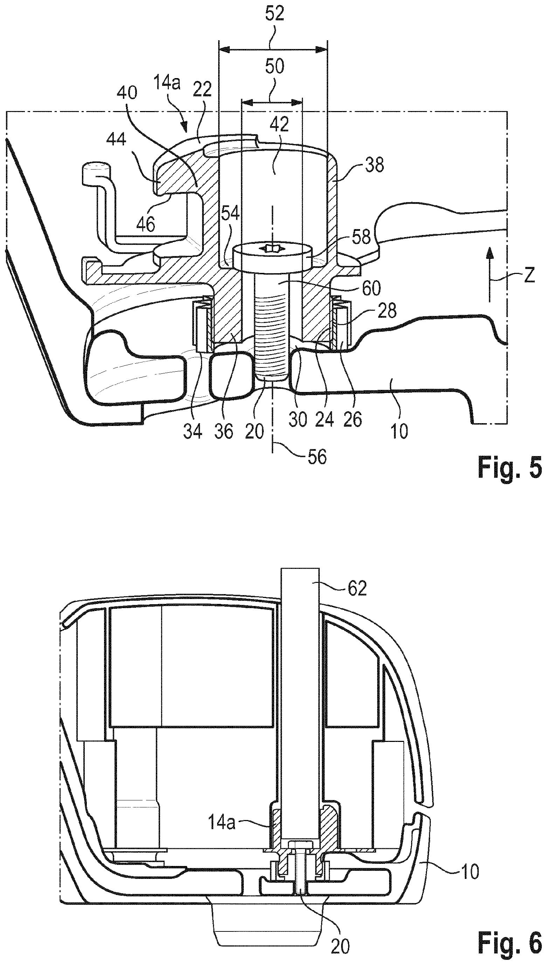

Das Distanzelement 14a ist in den Figuren 4 und 5 im Detail zu sehen. Die übrigen Distanzelemente 14b, 14c sind identisch aufgebaut. Das Distanzelement 14a besteht aus einem bauteilseitigen Halteteil 22, das hier als gassackmodulseitiges Halteteil ausgeführt ist, sowie einem trägerseitigen Halteteil 26, das hier als fahrzeuglenkradseitiges Halteteil ausgeführt ist, wobei das trägerseitige Halteteil 26 ein erstes Gewinde 28 und das bauteilseitige Halteteil 22 ein zweites Gewinde 24 besitzt. In der dargestellten Ausführungsform ist das zweite Gewinde 24 ein Außengewinde und das erste Gewinde 28 ein Innengewinde in einem Durchgangsloch 30 des Halteteils 26. Beide Gewinde 24, 28 greifen ineinander ein.

Das Halteteil 26 ist als Mutter mit einer am äußeren Umfang angeordneten Verzahnung 32 ausgeführt. Diese Verzahnung 32 ermöglicht es, das Halteteil 26 relativ zum Halteteil 22 anzutreiben und zu verdrehen. Das kann z.B. von Hand geschehen. Alternativ kann ein Werkzeug genutzt werden, das entweder von Hand betätigt und/oder von einem Motor angetrieben und seitlich angesetzt wird.

Auf der dem Halteteil 22 abgewandten Seite hat das Halteteil 26 eine Stirnfläche 34, die in Figur 4 am Fahrzeuglenkrad 10, genauer gesagt an einem Lenkradskelett, anliegt.

Insgesamt hat das Halteteil 26 die Form eines geschlossenen Rings.

Das Halteteil 22 hat im Wesentlichen die Form einer Hülse, die einen Gewindeabschnitt 36, einen Kopfabschnitt 38 und einen Halteabschnitt 40 umfasst. Darüber hinaus ist im Halteteil 22 ein Durchgangsloch 42 realisiert.

An der äußeren Mantelfläche des Gewindeabschnitts 36 befindet sich das zweite Gewinde 24. Der Halteabschnitt 40 umfasst in der dargestellten Ausführungsform einen einstückig an das Halteteil 22 angeformten Haken 44, der einen Hinterschnitt 46 definiert, in dem die Rastfeder 18 aufgenommen und gehalten werden kann.

Jeder Kopfabschnitt 38 ist in der dargestellten Ausführungsform so gestaltet, dass er in einer Vertiefung 48 (siehe Figur 2) eines ihm zugeordneten Gegenelements 16a, 16b, 16c am Bauteil eingesetzt werden kann. Quer durch die Vertiefungen 48 erstreckt sich die darin (mit Bezug auf eine Schraubenlängsachse 56 der Schraube 20) axial festgelegte, jedoch seitlich auslenkbare Rastfeder 18, sodass eine Rastverbindung zwischen Bauteil und Träger geschaffen wird.

Das Durchgangsloch 42 hat zwei unterschiedlich große Abschnitte, mit zwei unterschiedlichen, konzentrischen Durchmessern 50, 52. Den Übergang zwischen den beiden Durchmessern 50, 52 bildet ein Absatz 54. Wie in Figur 5 zu sehen, ist der kleinere Durchmesser 50 auf der dem Fahrzeuglenkrad 10 zugewandten Seite des Halteteils 22 und der größere Durchmesser 52 auf der dem Gassackmodul 12 zugewandten Seite des Halteteils 22 angeordnet.

Beide Halteteile 22, 26 werden durch die Schraube 20 am Fahrzeuglenkrad 10 gehalten. Die Schraube 20 stellt ein trägerseitiges Befestigungsmittel dar und verfügt über eine Schraubenlängsachse 56, einen Schraubenkopf 58 und einen Schaft 60 mit einem Gewinde, das zur Befestigung des Distanzelements 14a am Fahrzeuglenkrad 10 in ein Gegengewinde des Lenkradskeletts eingedreht werden kann.

Der Schraubenkopf 58 drückt, wenn die Schraube 20 in das Lenkradskelett fest eingedreht ist, gegen den Absatz 54. Der Schaft 60 durchgreift das Durchgangsloch 42 und das Halteteil 26. Der Durchmesser des Schafts 60 ist kleiner, als der Durchmesser 50 des Durchgangslochs 42, und der Durchmesser des Schraubenkopfes 58 ist größer als der Durchmesser 50.

Das Verfahren zum Herstellen der Fahrzeugbaugruppe wird im Folgenden erläutert. Im Ausgangszustand ist das Halteteil 22 des Distanzelements 14a in das Halteteil 26 etwas eingeschraubt. Mittels eines Werkzeugs, das das Distanzelement 14a hält, wird dieses nun mit dem Durchgangsloch 42 im Wesentlichen konzentrisch zum Gewinde im Fahrzeuglenkrad 10 ausgerichtet.

Zu betonen ist in diesem Zusammenhang, dass das Gewinde für die Schraube 20 natürlich nicht unbedingt im Lenkradskelett des Fahrzeuglenkrads 10 ausgeführt sein muss, es ist ebenso möglich, auf der Rückseite des Lenkradskeletts entsprechende Muttern vorzusehen.

Neben der seitlichen Ausrichtung wird das Distanzelement 14a auch in Richtung der Z-Achse so ausgerichtet, dass die Stirnfläche 34 des Halteteils 26 in einer Ausrichtebene, die auch Nullebene genannt wird, liegt. Diese Ausrichtebene ist von der zugeordneten, späteren Kontaktfläche auf der Oberseite des Fahrzeuglenkrads 10 noch beabstandet. Dieser Abstand dient dazu, sämtliche Fertigungstoleranzen des Lenkradskeletts und auch des Distanzelements 14a auszugleichen. Anschließend wird die Schraube 20 durch die Durchgangslöcher 42 und 30 hindurchgesteckt und in das entsprechende Gewinde im Fahrzeuglenkrad 10 eingedreht, ohne festgezogen zu werden. Dafür kann ein in Figur 6 schematisch dargestelltes Drehwerkzeug 62 verwendet werden. Dieses ist bevorzugt motorangetrieben.

Alternativ hierzu kann das Distanzelement 14a gleich mit dem Fahrzeuglenkrad 10 in Kontakt kommen. Durch Drehen des Halteteils 26 wird dann das Halteteil 22 weiter vom Lenkrad 10 wegbewegt, bis es eine Ausrichtebene erreicht, die z.B. durch einen werkzeugseitigen Anschlag definiert ist.

In dieser Phase kann das Distanzelement 14a auch noch in der X-Y-Ebene relativ zum Fahrzeuglenkrad verschoben und ausgerichtet werden.

Nachfolgend wird das Halteteil 22 fest in Position gehalten, und zwar in allen drei Raumrichtungen, und das Halteteil 26 wird durch das Werkzeug 62 in Drehung versetzt. Das Werkzeug 62 kann, wie in Figur 5 leicht zu erkennen ist, nicht von oben über das seitlich auskragende Halteteil 22 auf das Halteteil 26 aufgesetzt werden. Vielmehr hat das Werkzeug 62 ein angetriebenes Stirnrad, welches seitlich in die Verzahnung 32 eingreift und diese mitnimmt. Das in diesem Fall wie eine Spindelmutter wirkende Halteteil 26 wird durch die Verdrehung axial in Richtung zum Fahrzeuglenkrad 10 bewegt, bis es an ihm anschlägt. Dieser Antrieb des Halteteils 26 kann kraftgesteuert erfolgen, was bedeutet, dass ab Erreichen einer vorgegebenen Kraft das Werkzeug 62 abgeschaltet wird oder eine Drehmomentbegrenzung eingreift. Das Halteteil 22 wird weiter festgehalten. Nun wird die Schraube 20 festgezogen, nachdem das Distanzelement 14a auf die richtige Länge gebracht worden ist und am Fahrzeuglenkrad 10 anliegt.

Die übrigen Distanzelemente 14b, 14c werden anschließend entsprechend ausgerichtet und am Fahrzeuglenkrad 10 befestigt. Da das erste Distanzelement 14a bereits in der optimalen Lage ist, können die Distanzelemente 14b und 14c dann entsprechend positioniert und in dieser Position durch Veränderung der Länge der Distanzelemente 14b und 14c so am Fahrzeuglenkrad 10 befestigt sein, dass beispielsweise sämtliche Hinterschnitte 46 in einer Ebene liegen.

Natürlich wäre es auch möglich, mit einem Werkzeug alle drei Distanzelemente 14a, 14b, 14c gleichzeitig zu positionieren und am Fahrzeuglenkrad 10 zu befestigen. In diesem Fall kann beispielsweise eine Halterung vorgesehen sein, die von vorneherein die exakte Z-Ausrichtung, aber gegebenenfalls auch zusätzlich die X-Y-Ausrichtung der Halteelemente 22 sicherstellt. Sämtliche Toleranzen des Fahrzeuglenkrads 10 und der Distanzelemente 14a bis 14c, vor allem in Z-Richtung, werden damit ausgeglichen.

Natürlich können auch weniger als drei Distanzelemente vorgesehen sein, die individuell eingestellt werden. Beispielsweise kann ein hakenförmiger Fortsatz als ein Distanzelement fest am Fahrzeuglenkrad 10 vorgesehen oder angeformt sein. Von diesem Fixierpunkt ausgehend werden dann die anderen beiden Distanzelemente oder das verbleibende zweite Distanzelement entsprechend ausgerichtet und befestigt. Das nicht verstellbare Distanzelement dient sozusagen als Fixpunkt.

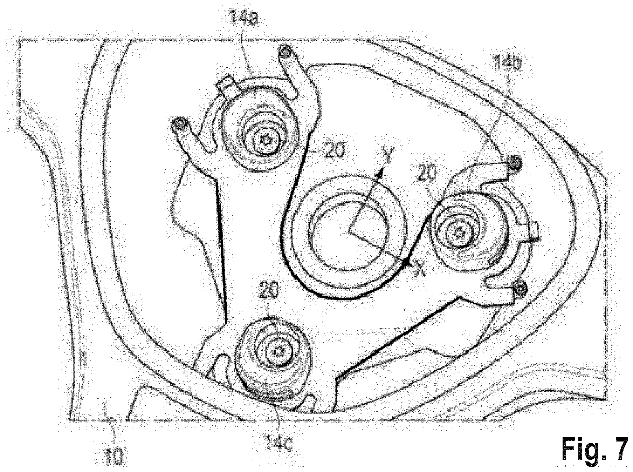

Die Figur 7 zeigt eine Lagereinheit gemäß einer alternativen Ausführungsform. Im Unterschied zu Figur 3 sind die einzelnen Distanzelemente 14a, 14b, 14c hier nicht separat ausgebildet, sondern fest miteinander verbunden. Besonders bevorzugt sind die Distanzelemente 14a, 14b, 14c über ihr jeweiliges bauteilseitiges Halteteil 22 einstückig miteinander verbunden.

Auf diese Weise sind die Distanzelemente 14a, 14b, 14c für eine X-Y-Ausrichtung miteinander gekoppelt. In Z-Richtung erfolgt die Einstellung an einzelnen verstellbaren Distanzelementen 14a, 14b, 14c.

Im Vergleich zu mehreren separaten Distanzelementen 14a, 14b, 14c lässt sich durch die im Wesentlichen starre Verbindung der Distanzelemente 14a, 14b, 14c eine gewünschte Positionierung der Lagereinheit mit geringerem Montageaufwand erreichen. Ferner kann insbesondere der Einfluss einer unebenen oder schiefliegenden lenkradseitigen Befestigungsfläche auf die Positionsgenauigkeit der Lagereinheit reduziert werden.

## Patentansprüche

1. Lagereinheit einer Fahrzeugbaugruppe, wobei die Fahrzeugbaugruppe eine Innenraumbaugruppe ist und einen fahrzeugseitigen Träger sowie ein am Träger zu befestigendes Bauteil aufweist, wobei der Träger ein Fahrzeuglenkrad (10) und das am Träger zu befestigende Bauteil ein Gassackmodul (12) ist, mit
wenigstens einem verstellbaren Distanzelement (14a, 14b, 14c) zur Lageausrichtung des Bauteils am Träger und
einem ersten Befestigungsmittel, durch welches der Träger oder das Bauteil am Distanzelement (14a, 14b, 14c) festlegbar ist,
wobei das Distanzelement (14a, 14b, 14c) ein trägerseitiges Halteteil (26), das ein erstes Gewinde (28) umfasst, ein bauteilseitiges Halteteil (22), das ein zweites Gewinde (24) umfasst, und ein zweites Befestigungsmittel aufweist, mit dem das trägerseitige Halteteil (26) am Träger oder das bauteilseitige Halteteil (22) am Bauteil festlegbar ist,
wobei das zweite Gewinde (24) in das erste Gewinde (28) derart eingreift, dass sich durch eine Rotationsbewegung des trägerseitigen Halteteils (26) relativ zum bauteilseitigen Halteteil (22) die Länge des Distanzelements (14a, 14b, 14c) ändert, und
wobei das trägerseitige Halteteil (26) oder das bauteilseitige Halteteil (22) als Mutter und das andere der beiden Halteteile (22, 26) als in die Mutter eingedrehte Hülse ausgebildet ist.

2. Lagereinheit nach Anspruch 1, **dadurch gekennzeichnet, dass** die Mutter auf ihrer äußeren Mantelfläche mindestens abschnittsweise eine Verzahnung (32) aufweist.

3. Lagereinheit nach einem der vorhergehenden Ansprüche, **dadurch gekennzeichnet, dass** das erste Befestigungsmittel bauteilseitig angeordnet ist und eine Rastfeder (18) umfasst, die einerseits am bauteilseitigen Halteteil (22) und andererseits am Bauteil befestigbar ist, um das Bauteil mit dem Distanzelement (14a, 14b, 14c) lösbar zu koppeln.

4. Lagereinheit nach Anspruch 3, **dadurch gekennzeichnet, dass** an dem bauteilseitigen Halteteil (22) eine Halterung angeformt ist, in die die Rastfeder (18) einsetzbar ist und die diese lagert, insbesondere wobei die Halterung ein einstückig angeformter Haken (44) ist.

5. Lagereinheit nach einem der vorhergehenden Ansprüche, **dadurch gekennzeichnet, dass** das zweite Befestigungsmittel trägerseitig angeordnet und eine durch Durchgangslöcher (30, 42) in dem träger- und in dem bauteilseitigen Halteteil (22, 26) hindurchragende Schraube (20) ist, die in den Träger eindrehbar ist.

6. Lagereinheit nach Anspruch 5, **dadurch gekennzeichnet, dass** das Durchgangsloch (42) im bauteilseitigen Halteteil (22) einen Absatz (54) zur Anlage eines Schraubenkopfes (58) hat und/oder das Durchgangsloch (42) im bauteilseitigen Halteteil (22) gegenüber der Schraube (20) übergroß ist, sodass das Distanzelement (14a, 14b, 14c) relativ zur noch nicht angezogenen Schraube (20) quer zu einer Schraubenlängsachse (56) verschiebbar ist.

7. Lagereinheit nach einem der vorhergehenden Ansprüche, mit mehreren, unabhängig voneinander verstellbaren, vorzugsweise drei, Distanzelementen (14a, 14b, 14c), insbesondere wobei das bauteilseitige Befestigungsmittel an allen Distanzelementen (14a, 14b, 14c) gelagert ist.

8. Lenkradbaugruppe mit einem Fahrzeuglenkrad (10) und einem Gassackmodul (12), **dadurch gekennzeichnet, dass** das Fahrzeuglenkrad (10) und das Gassackmodul (12) durch eine Lagereinheit nach einem der Ansprüche 1 bis 7 miteinander verbunden sind.

9. Verfahren zur Herstellung einer Fahrzeugbaugruppe mit einem fahrzeugseitigen Träger einem am Träger zu befestigenden Bauteil und zumindest einer Lagereinheit nach einem der Ansprüche 1 bis 7, wobei der Träger ein Fahrzeuglenkrad (10) und das am Träger zu befestigende Bauteil ein Gassackmodul (12) ist, und wobei das Verfahren die folgenden Schritte umfasst:
a) Anordnen mindestens eines verstellbaren Distanzelements (14a, 14b, 14c) relativ zum Träger,
b) Rotieren eines der beiden Halteteile (22, 26) relativ zum anderen der beiden Halteteile (26, 22) zur Einstellung der Länge des Distanzelements (14a, 14b, 14c),
c) Arretieren des trägerseitigen Befestigungsmittels und damit des eingestellten Distanzelements (14a, 14b, 14c) am Träger, wobei das trägerseitige oder das bauteilseitige Halteteil (22, 26) als Mutter ausgebildet ist, und
d) Arretieren des Bauteils durch Anbringen des bauteilseitigen Befestigungsmittels am Bauteil und am Distanzelement (14a, 14b, 14c).

10. Verfahren nach Anspruch 9, **dadurch gekennzeichnet, dass** im Schritt a) das Distanzelement (14a, 14b, 14c) in einem Abstand zum Träger angeordnet wird und im Schritt b) eines der beiden Halteteile (22, 26) relativ zum anderen derart verdreht wird, dass das Distanzelement (14a, 14b, 14c) axial am Träger anschlägt.

11. Verfahren nach Anspruch 9 oder 10, **dadurch gekennzeichnet, dass** im Schritt c) die Mutter über eine mindestens abschnittsweise auf einer äußeren Mantelfläche der Mutter angeordnete Verzahnung (32) in Rotationsbewegung versetzt wird, insbesondere über ein motorangetriebenes Werkzeug (62).

12. Verfahren nach einem der Ansprüche 9 bis 11, **dadurch gekennzeichnet, dass** das trägerseitige Befestigungsmittel eine Schraube (20) ist, die vor Schritt b) in den Träger eingedreht wird, ohne axial verspannt zu werden, so dass im Schritt b) das Distanzelement (14a, 14b, 14c) in seiner Länge verändert werden kann, und dass erst im Schritt c) die Schraube (20) angezogen wird.

13. Verfahren nach einem der Ansprüche 9 bis 12, **dadurch gekennzeichnet, dass** das wenigstens eine Distanzelement (14a, 14b, 14c) vor Schritt c) seitlich verschoben und seitlich relativ zum Träger ausgerichtet wird.

14. Verfahren nach einem der Ansprüche 9 bis 13, **dadurch gekennzeichnet, dass** drei verstellbare Distanzelemente (14a, 14b, 14c) verwendet werden, die vorzugsweise unabhängig voneinander verstellbar sind.

15. Verfahren nach einem der Ansprüche 9 bis 14, **dadurch gekennzeichnet, dass** im Schritt a) mehrere, vorzugsweise alle Distanzelemente (14a, 14b, 14c) in einem Werkzeug zueinander ausgerichtet gehalten, zum Träger bewegt und zu ihm ausgerichtet werden.

## Claims

1. A bearing unit of a vehicle subassembly, wherein the vehicle subassembly is an interior subassembly and has a vehicle-mounted support and a component which is to be fastened on the support, wherein the support is a vehicle steering wheel (10) and the component to be fastened on the support is an airbag module (12), comprising
at least one adjustable spacer element (14a, 14b, 14c) for orienting the position of the component on the support, and
a first fastener by which the support or the component can be fixed on the spacer element (14a, 14b, 14c),
wherein the spacer element (14a, 14b, 14c) has a support-side holding member (26) comprising a first thread (28), a component-side holding member (22) comprising a second thread (24) and a second fastener by which the support-side holding member (26) can be fixed on the support or the component-side holding member (22) can be fixed on the component,
wherein the second thread (24) engages in the first thread (28) in such a way that the length of the spacer element (14a, 14b, 14c) varies by a rotational movement of the support-side holding member (26) relative to the component-side holding member (22), and
wherein the support-side holding member (26) or the component-side holding member (22) is in the form of a nut and the other one of the two holding members (22, 26) is in the form of a sleeve screwed into the nut.

2. The bearing unit according to claim 1, **characterized in that** the nut at least in portions has a toothing (32) on its outer circumferential surface.

3. The bearing unit according to any one of the preceding claims, **characterized in that** the first fastener is arranged on the component side and comprises a stop spring (18) which can be fastened, on the one hand, to the component-side holding member (22) and, on the other hand, to the component so as to releasably couple the component to the spacer element (14a, 14b, 14c).

4. The bearing unit according to claim 3, **characterized in that** a holding fixture into which the stop spring (18) can be inserted and which supports the same is integrally formed on the component-side holding member (22), especially wherein the holding fixture is an integrally formed hook (44).

5. The bearing unit according to any one of the preceding claims, **characterized in that** the second fastener is arranged on the support side and is a screw (20) projecting through through-holes (30, 42) in the support-side and component-side holding members (22, 26) and being adapted to be screwed into the support.

6. The bearing unit according to claim 5, **characterized in that** in the component-side holding member (22) the through-hole (42) has a step (54) for contacting a screw head (58) and/or the through-hole (42) in the component-side holding member (22) is oversized as compared to the screw (20) so that the spacer element (14a, 14b, 14c) can be displaced transversely to a longitudinal screw axis (56) relative to the not yet tightened screw (20).

7. The bearing unit according to any one of the preceding claims, comprising plural, preferably three, spacer elements (14a, 14b, 14c) adjustable independently of each other, especially wherein the component-side fastener is supported on all of the spacer elements (14a, 14b, 14c).

8. A steering wheel subassembly comprising a vehicle steering wheel (10) and an airbag module (12), **characterized in that** the vehicle steering wheel (10) and the airbag module (12) are connected to each other by a bearing unit according to any one of the claims 1 to 7.

9. A method for producing a vehicle subassembly comprising a vehicle-side support, a component to be fastened to the support, and at least one bearing unit according to any one of the claims 1 to 7, wherein the support is a vehicle steering wheel (10) and the component to be fastened on the support is an airbag module (12), the method comprising the following steps of:
a) arranging at least one adjustable spacer element (14a, 14b, 14c) relative to the support,
b) rotating either of the two holding members (22, 26) relative to the other one of the two holding members (26, 22) for adjusting the length of the spacer element (14a, 14b, 14c),
c) locking the support-side fastener and thus the adjusted spacer element (14a, 14b, 14c) on the support, wherein the support-side holding member (26) or the component-side holding member (22) is in the form of a nut, and
d) locking the component by attaching the component-side fastener to the component and to the spacer element (14a, 14b, 14c).

10. The method according to claim 9, **characterized in that** in step a) the spacer element (14a, 14b, 14c) is arranged at a distance from the support and in step b) either of the two holding members (22, 26) is rotated relative to the other so that the spacer element (14a, 14b, 14c) axially abuts on the support.

11. The method according to claim 9 or 10, **characterized in that** in step c) the nut is rotated via a toothing (32) arranged at least in portions on an outer circumferential surface of the nut, especially via a motor-driven tool (62).

12. The method according to any one of the claims 9 to 11, **characterized in that** the support-side fastener is a screw (20) which prior to step b) is screwed into the support without being axially twisted so that in step b) the spacer element (14a, 14b, 14c) may be varied in its length and **in that** as late as in step c) the screw (20) is tightened.

13. The method according to any one of the claims 9 to 12, **characterized in that** prior to step c) the at least one spacer element (14a, 14b, 14c) is laterally displaced and is laterally oriented relative to the support.

14. The method according to any one of the claims 9 to 13, **characterized in that** three adjustable spacer elements (14a, 14b, 14c) which can be adjusted preferably independently of each other are used.

15. The method according to any one of the claims 9 to 14, **characterized in that** in step a) in a tool plural, preferably all of the spacer elements (14a, 14b, 14c) are held oriented relative to each other, are moved toward the support and are oriented relative to the support.

## Revendications

1. Unité de stockage d'un ensemble de véhicule, pour lequel l'ensemble de véhicule est un ensemble d'habitacle et présente un support côté véhicule ainsi qu'un composant à fixer sur le support, pour lequel le support est un volant de direction de véhicule (10) et le composant à fixer sur le support est un module airbag (12), avec
au moins un élément d'écartement réglable (14a, 14b, 14c) pour orienter la position du composant sur le support et
un premier moyen de fixation par lequel le support ou le composant peut être fixé à l'élément d'écartement (14a, 14b, 14c),
pour lequel l'élément d'écartement (14a, 14b, 14c) présente une partie de retenue (26) côté support, qui comprend un premier filetage (28), une partie de retenue (22) côté composant, qui comprend un deuxième filetage (24), et possède un deuxième moyen de fixation, avec lequel la partie de retenue (26) côté support peut être fixée au support ou la partie de retenue (22) côté composant peut être fixée au composant,
pour lequel le deuxième filetage (24) s'engage dans le premier filetage (28) de telle sorte qu'un mouvement de rotation de la partie de retenue côté support (26) par rapport à la partie de retenue côté composant (22) modifie la longueur de l'élément d'écartement (14a, 14b, 14c), et
pour lequel la partie de retenue côté support (26) ou la partie de retenue côté composant (22) est conçue comme un écrou et l'autre des deux pièces de retenue (22, 26) étant conçue comme une douille vissée dans l'écrou.

2. Unité de stockage selon la revendication 1, **caractérisée en ce que** l'écrou présente sur sa surface d'enveloppe extérieure, au moins par sections, une denture (32).

3. Unité de stockage selon l'une des revendications précédentes, **caractérisée en ce que** le premier moyen de fixation est disposé du côté du composant et comprend un ressort d'encliquetage (18) lequel peut être fixé d'une part à la partie de retenue (22) du côté du composant et d'autre part au composant, afin de coupler de manière amovible le composant à l'élément d'écartement (14a, 14b, 14c).

4. Unité de stockage selon la revendication 3, **caractérisée en ce qu'**une fixation est formée sur la partie de retenue (22) côté composant, dans laquelle le ressort d'arrêt (18) peut être inséré et qui le supporte, en particulier pour lequel la fixation est un crochet (44) formé d'une seule pièce.

5. Unité de stockage selon l'une des revendications précédentes, **caractérisée en ce que** le deuxième moyen de fixation est disposé du côté du support et est une vis (20) traversant des trous de passage (30, 42) dans la partie de retenue (22, 26) située du côté du support et dans la partie de retenue située du côté de l'élément de construction, cette vis peut être vissée dans le support.

6. Unité de stockage selon la revendication 5, **caractérisée en ce que** le trou de passage (42) dans la partie de retenue (22) côté composant a un épaulement (54) pour l'application d'une tête de vis (58) et/ou le trou de passage (42) dans la partie de retenue (22) côté composant est surdimensionné par rapport à la vis (20), de sorte que l'élément d'écartement (14a, 14b, 14c) peut être déplacé par rapport à la vis (20) non encore serrée, transversalement à un axe longitudinal de vis (56).

7. Unité de stockage selon l'une des revendications précédentes, avec plusieurs éléments d'écartement (14a, 14b, 14c) réglables indépendamment les uns des autres, de préférence trois, en particulier pour lequel le moyen de fixation côté composant est monté sur tous les éléments d'écartement (14a, 14b, 14c).

8. Ensemble de volant de direction comprenant un volant de direction de véhicule (10) et un module airbag (12), **caractérisé en ce que** le volant de direction de véhicule (10) et le module airbag (12) sont reliés entre eux par une unité de stockage selon l'une des revendications 1 à 7.

9. Procédé de fabrication d'un ensemble de véhicule comprenant un support côté véhicule, un composant à fixer sur le support et au moins une unité stockage selon l'une des revendications 1 à 7, pour lequel le support est un volant de direction de véhicule (10) et le composant à fixer sur le support est un module airbag (12), et pour lequel le procédé comprend les étapes suivantes :
a) Mettre en place au moins un élément d'écartement réglable (14a, 14b, 14c) par rapport au support,
b) Faire tourner l'une des deux parties de support (22, 26) par rapport à l'autre des deux parties de support (26, 22) pour régler la longueur de l'élément d'écartement (14a, 14b, 14c),
c) Bloquer le moyen de fixation côté support et donc l'élément d'écartement (14a, 14b, 14c) réglé sur le support, pour lequel la pièce de retenue (22, 26) côté support ou côté composant est conçue comme un écrou, et
d) Bloquer le composant en plaçant le moyen de fixation côté composant sur le composant et sur l'élément d'écartement (14a, 14b, 14c)..

10. Procédé selon la revendication 9, **caractérisé en ce que**, à l'étape a), l'élément d'écartement (14a, 14b, 14c) est disposé à distance du support et, à l'étape b), l'une des deux parties de retenue (22, 26) est tournée par rapport à l'autre de sorte que l'élément d'écartement (14a, 14b, 14c) vienne buter axialement contre le support.

11. Procédé selon la revendication 9 ou 10, **caractérisé en ce qu'**à l'étape c), l'écrou est mis en rotation par l'intermédiaire d'une denture (32) disposée au moins par tronçons sur une surface latérale extérieure de l'écrou, notamment par l'intermédiaire d'un outil (62) entraîné par un moteur.

12. Procédé selon l'une des revendications 9 à 11, **caractérisé en ce que** le moyen de fixation côté support est une vis (20), laquelle est vissée dans le support avant l'étape b), sans être serrée axialement, de sorte qu'à l'étape b), l'élément d'écartement (14a, 14b, 14c) peut être modifié en longueur, et que ce n'est qu'à l'étape c) que la vis (20) est serrée.

13. Procédé selon l'une des revendications 9 à 12, **caractérisé en ce que** ledit au moins un élément d'écartement (14a, 14b, 14c) est déplacé latéralement et orienté latéralement par rapport au support avant l'étape c).

14. Procédé selon l'une quelconque des revendications 9 à 13, **caractérisé en ce que** l'on utilise trois éléments d'écartement réglables (14a, 14b, 14c), lesquels sont de préférence réglables indépendamment les uns des autres.

15. Procédé selon l'une des revendications 9 à 14, **caractérisé en ce que**, à l'étape a), plusieurs, de préférence tous les éléments d'espacement (14a, 14b, 14c) sont maintenus alignés dans un outil les uns par rapport aux autres, pour être déplacés vers le support et alignés par rapport à celui-ci.
